# EUROPEAN PATENT SPECIFICATION

(11) **EP 2 480 383 B1**
(45) Date of publication and mention of the grant of the patent: **23.04.2014**
(21) Application number: 10751922.5
(22) Date of filing: 03.09.2010
(51) Int. Cl.: B25J 15/00, B25J 19/00

(54) **QUALITY CONTROL SYSTEM AND METHOD FOR MANUFACTURED PARTS**
VERFAHREN UND SYSTEM ZUR ÜBERPRÜFUNG HERGESTELLTER TEILE
PROCEDE ET DISPOSITIF PERMETTANT D'ATTESTER LE QUALITE DE PIÈCES FABRIQUÉES

(30) Priority: 21.09.2009 US 244233 P
(43) Date of publication of application: 01.08.2012
(73) Proprietor: ABB Technology AG, 8050 Zürich (CH)
(72) Inventor: CASANELLES, Ramon, E-08173 Barcelona (ES); CORTÉS GRAU, Francesc, E-08201 Barcelona (ES)
(74) Representative: Savela, Reino Aleksi
(86) International application number: PCT/EP2010/062957
(87) International publication number: WO 2011/032847

(56) References cited:
- JP-A- 5 146 981
- JP-A- 5 318 361
- JP-A- 8 313 225
- JP-A- 2008 168 406
- JP-A- 2008 178 930

## Description

### TECHNICAL FIELD.

The present invention is concerned with a method for carrying out a quality inspection on a manufactured part. In particular it is concerned with quality inspection which is carried out automatically in part by an industrial robot.

### TECHNICAL BACKGROUND

Quality Inspection is required in many different areas of industry, for example Automotive, White goods, Foundries, Welding operations, Painted products, Food production, Pharmaceutical production and others. Companies are striving to decrease the Cost of Poor Quality (CoPQ) while increasing the quality of products offered to the market. This cost grows exponentially with the detection of faults within later or subsequent production processes. For this reason, Quality inspection is a general demand in many areas.

The use of robots to handle workpieces, blanks or semi-finished parts in manufacturing processes is expanding. Todays manufacturing approach often consists of the robot placing the finished or semi-finished part on a belt conveyor, where the quality inspection is being done subsequently by operators. To take a Press-shop case as an example of a manufacturing process. The automation of a press line usually ends with robot or manipulator unloading parts from the last press on to a belt conveyor. The completion of the Press shop automation would often be placing the stamped parts on rack assigned to be transported to the Body-shop area. In the case of skin panels, one of the reasons not to put the parts automatically from the last press into the racks is the requirement of first carrying out a surface Quality inspection. Todays approach consists then of the robot placing the part on a belt conveyor, where the quality inspection is being done by operators. In the case that part quality is within the correct parameters, the operator(e) take the part and put it into the corresponding rack or container or; lets it pass for racking or possibly for automatic racking by robot. In this last case the operation might be really complex since the robot in charge of the operation must first locate the part on the conveyor for a correct picking. The part might be unstable and could require a complex arrangement with a triple band belt conveyors with adjustable height in central band to provide the required stability to keep the part from moving about. Finally, a vision system, possibly 3D, or mechanical centering device will be required to locate or center the part. JP 8 313225A, to Nippondenso, 29 November 1996, discloses that an object to be inspected may be moved by a robot to an inspection place for inspection by a camera.

### SUMMARY OF THE INVENTION

The aim of the present invention is to remedy one or more of the above mentioned problems.

In a first aspect of the invention a system for quality inspection in production of manufactured parts is disclosed, the system comprising a production process having at least one industrial robot equipped with a handling tool for picking up a manufactured part wherein the robot is arranged in a quality inspection cell and that the robot is programmed to hold the manufactured part in at least one known position in the quality inspection cell and present the part for a quality inspection.

According to an embodiment of the invention, a system for quality inspection in production of manufactured parts is disclosed, the system comprising a production process and having at least one industrial robot equipped with a handling tool for picking up a manufactured part wherein the robot is programmed to orient the manufactured part in at least one known orientation relative to the known position in 3-dimensional space.

According to another embodiment of the invention, a system for quality inspection in production of manufactured parts is disclosed, the system comprising a production process and having at least one industrial robot equipped with a handling tool for picking up a manufactured part wherein the quality inspection cell is arranged with safety devices and/or safety functions for protecting an operator from the robot and/or the manufactured part being handled by the robot for manual inspection by the operator.

According to another embodiment of the invention, a system for quality inspection in production of manufactured parts is disclosed, the system comprising a production process and having at least one industrial robot equipped with a handling tool for picking up a manufactured part wherein the quality inspection cell is arranged having one or more sensors arranged in the cell for making a quality inspection.

According to another embodiment of the invention, a system for quality inspection in production of manufactured parts is disclosed, the system comprising a production process and having at least one industrial robot equipped with a handling tool for picking up a manufactured part wherein at least one known position consists of one or more positions and orientations of the part in the quality inspection cell suitable for an operator to inspect the part visually and/or with the use of a tool or sensor.

In another embodiment of the invention, a system for quality inspection in production of manufactured parts is disclosed, the system comprising a production process and having at least one industrial robot equipped with a handling tool for picking up a manufactured part wherein the one or more sensors are each arranged in fixed position in the quality inspection cell.

In another embodiment of the invention, a system for quality inspection in production of manufactured parts is disclosed, the system comprising a production process and having at least one industrial robot equipped with a handling tool for picking up a manufactured part wherein at least one of the one or more sensors is arranged on any from the group of: a servo-controlled second manipulator, a second manipulator which is not servo-controlled.

According to another embodiment of the invention, a system for quality inspection in production of manufactured parts is disclosed, the system comprising a production process and having at least one industrial robot equipped with a handling tool for picking up a manufactured part wherein the at least one of the one or more sensors is arranged to measure one or more values dependent on any from the group of: a surface quality of the part, a structural parameter of the part, a dimension of the part.

According to another embodiment of the invention, a system for quality inspection in production of manufactured parts is disclosed, the system comprising a production process and having at least one industrial robot equipped with a handling tool for picking up a manufactured part wherein the handling tool comprises any device from the group of: vacuum cups, grippe, magnets or other mechanical means.

According to another embodiment of the invention, a system for quality inspection in production of manufactured parts is disclosed, the system comprising a production process and having at least one industrial robot equipped with a handling tool for picking up a manufactured part wherein at least one second robot is arranged relative to the quality inspection cell and programmed to receive the part from a robot that has unloaded the part from the production process and to hold the manufactured part in at least one known position in the quality inspection cell and present the part for a quality inspection.

According to another embodiment of the invention, a system for quality inspection in production of manufactured parts is disclosed, the system comprising a production process and having at least one industrial robot equipped with a handling tool for picking up a manufactured part wherein the quality inspection cell further comprises a rack or fixture suitable for holding one or more manufactured parts in a known positions and orientation for subsequent pick up and quality inspection, or for a quality inspection check while it is placed in said fixture or rack.

In a second aspect of the invention a method for carrying out a quality inspection of manufactured parts in a production system is disclosed, the method comprising a production process having at least one industrial robot equipped with a handling tool for picking up a manufactured part and where in said method by the actions of the robot picking up the manufactured part and moving it to at least one known position in the quality inspection cell and presenting it for a quality inspection.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot picking up a manufactured part and orienting it to at least one known orientation in 3-dimensional space.

According to another embodiment of the invention, a method for carrying out a quality inspection of manufactured parts in a production system is disclosed, the method comprising a with a handling tool for picking up a manufactured part and by the actions in said method of the robot picking up a manufactured part and moving it to at least one known position in the quality inspection cell for an operator to inspect the part visually.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot picking up a manufactured part and moving it to at least one known position in the quality inspection cell for an operator to inspect the part using a sensor and /or a tool.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot picking up a manufactured part and placing it in at least one known position and orientation relative to one or more sensors in the inspection cell for an automatic inspection.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot picking up a manufactured part and moving it to at least one known position relative to at least one tool or sensor operated by an operator, and by receiving an input of an inspection result or a measurement for the manufactured part to a control unit in the production system.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot picking up a manufactured part and moving it to at least one known position relative to at least one sensor mounted on a manipulator arm of the robot.

According to another embodiment of the invention, a method for carrying out a quality inspection of manufactured parts in a production system is disclosed, the method comprising a production process having at least one industrial robot equipped with a handling tool for picking up a manufactured part and by the actions in said method of activating a safety devices and/or a safety function arranged with the robot before a manual inspection by an operator.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot picking up a manufactured part and moving it to a known position relative to at least one sensor mounted on a second and non-servo controlled manipulator.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot picking up a manufactured part and moving it to a known position relative to at least one sensor for measurement of one or more values dependent on any from the group of: a surface quality of the part, a structural parameter of the part, a dimension of the part.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot moving a manufactured part that has been quality inspected and placing it on a fixture or a rack for transfer to a subsequent process.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot moving a manufactured part that has been quality inspected and rejected and placing it on a conveyor, fixture or a rack for inspection and/or repair.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot picking up a manufactured part and handing it to at least one second robot for inspection and/or further placement.

According to another embodiment of the invention, a method for carrying out a quality inspection of manufactured parts in a production system is disclosed, the method comprising a production process having at least one industrial robot equipped with a handling tool for picking up a manufactured part and by the actions in said method of a second robot receiving a manufactured part from another robot that has unloaded the part which second robot moves the part to at least one known position in the quality inspection cell and presents it for a quality inspection.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot picking up a manufactured part from the production process and placing it on a rack or fixture before it is moved by a second robot to the quality inspection cell for a quality inspection.

According to another embodiment of the invention, a method for carrying out a quality inspection of manufactured parts in a production system is disclosed, the method comprising a production process having at least one industrial robot equipped with a handling tool for picking up a manufactured part and by the actions in said method of the robot picking up a manufactured part together with a second robot, and the two robots moving the part together to at least one known position relative in the quality inspection cell.

In a first aspect of the invention, a robot handles the part to be inspected, at a Quality Inspection station. In the Quality inspection station the parts are checked to detect possible defects. Depending on the result of this checking, the robot will leave the part at a reject station or else let the part continue in the process. The Quality inspection station can be manual or automatic:
- In the manual inspection case, an operator does a visual examination, which may be with the aid of some tools or a sensor. To facilitate the operator task by creating an ergonomic environment, the robot may orientate the part for optimal inspection. Due to the interaction Robot-Operator, the necessary safety measures for the operator must be provided. For this purpose ABB Robotics can supply different methods, different safety devices and robot functionalities.
- In the case of automatic inspection, the robot presents the part to an automatic Quality Inspection station consisting of one or more sensors. The sensors can be of different types, appropriate for detecting different types of defects. One or more sensors can also be handled by a small second robot or manipulator to provide additional flexibility to the system.

As the part is, at any moment, handled by robots, one of the main key values of an aspect of the invention is to maintain the information of its position, facilitating the completion of the whole process, which is a great improvement compared to traditional concepts in which the part location is lost and needs to be relocated in order for the part to continue in the process. Our proposed concept also eliminates the need of conveyors or complex conveyors, in which the position is lost, eliminating therefore the need of vision re-locating system or mechanical centering.

Also, in the case of manual inspection, as the robot handles the part, this can be presented to the operator in the right orientation to optimize his accessibility for the inspection. This provides a health and safety benefit for operators because the orientation and position can be optimized in for example an ergonomic way. This will reduce unnecessary movement or strain by the operator that may, for example, otherwise cause operator fatigue. Presentation by the robot also improves the technical aspects of the inspection because inspection for eg surface defects requires that the surface be viewed with adequate lighting and in a consistent way. The robot always present the part in the optimal position and orientation for quality inspection.

Quality Inspection is required in many different areas of industry, for example Automotive, White goods, Foundries, Welding operations, Painted products, Food production, Pharmaceutical production and others. As an example, Surface Quality (the appearance or cosmetic appearance) in skin (outer) Panels of doors, hoods and other body panels for automobiles is considered a must in automotive industry. Structural defects are also a main concern and therefore an object of inspection requirements. In the automotive car-body industry, typical sequential phases in the production process are Press-shop, Body-shop and Painting. The control and detection of Surface Quality might be done in the different process phases, although early detection means lower cost.

To be more concrete and as example to illustrate the advantages of our concept, we will focus on the application in a Press-shop, where several type of defects (like scratches, creases, cracks, etc.) need to be detected. Thus a surface defect on a stamped door skin panel may be corrected at low cost if detected immediately. Early detection also makes it possible to correct a problem before other parts are manufactured with a defect. The technical challenges and the cost much is greater if detection does not take place until a later stage, such as if the panel is mounted on an automobile and painted before the fault is detected.

Applying our concept to the case of automotive skin panels, the whole process is considerably simplified. The unloading robot, instead of placing the part on a belt conveyor, presents the part to another (or sequentially to more than one) robot. When transferring the part from one to another robot, the part is normally turned-over. This is to be able to present the correct surface for which the quality inspection is required. As the unloading robot usually picks up the part from the side to be inspected (the upper side) it is convenient that the robot hands it to another robot because a turning over of the part takes place in the handover. In this way, also, the unloading robot may split the flow of stamped parts by alternative handover to two or more robots that will work in parallel, each one presenting the part to one quality inspection station. Depending on the available cycle time, the same robots can place the parts on the rack or container or transfer to one other robot, or splitting that task as well and handing over to in two or more robot(s) to do it.

A computer program, a computer program product, and a computer program recorded on a computer-readable medium is disclosed in another aspect of the invention.

### BRIEF DESCRIPTION OF THE DRAWINGS

A more complete understanding of the method and system of the present invention may be had by reference to the following detailed description when taken in conjunction with the accompanying drawings wherein:
Figure 1 and Figure 2 shows two views of a computer simulated diagram of a quality inspection cell according to an embodiment of a first aspect of the invention;
Figure 3 shows a schematic diagram of the invention of Figures 1 and 2 showing in particular a layout for carrying out an embodiment using manual inspection in quality inspection cells;
Figures 4 and 5 show the invention of Figures 1 and 2 in which an automatic inspection is carried out in quality inspection cells according to another embodiment, wherein Figure 4 is a computer simulated diagram of automatic inspection and Figure 5 is a layout for carrying out this embodiment;
Figures 6-8 show the invention of Figures 1 and 2 in which an automatic inspection is carried out in quality inspection cells wherein sensors are handled by robots, and Figures 6, 7 are computer simulated diagrams of robots carrying out automatic inspection and Figure 8 is a layout for carrying out these embodiments;
Figure 9 shows a schematic layout of the invention of Figures 1 and 2 showing in particular a layout for carrying out an embodiment using a statistical inspection in quality inspection cells;
Figures 10, 11 are schematic flowcharts for one or more methods according to an embodiment of a second aspect of the invention of Figures 1 and 2; and
Figure 12 shows a schematic layout of the invention of Figures 1 and 2 showing in particular a layout for carrying out an embodiment in which the unloading robot carries out a part of the quality inspection.

### DESCRIPTION OF THE PREFERRED EMBODIMENTS

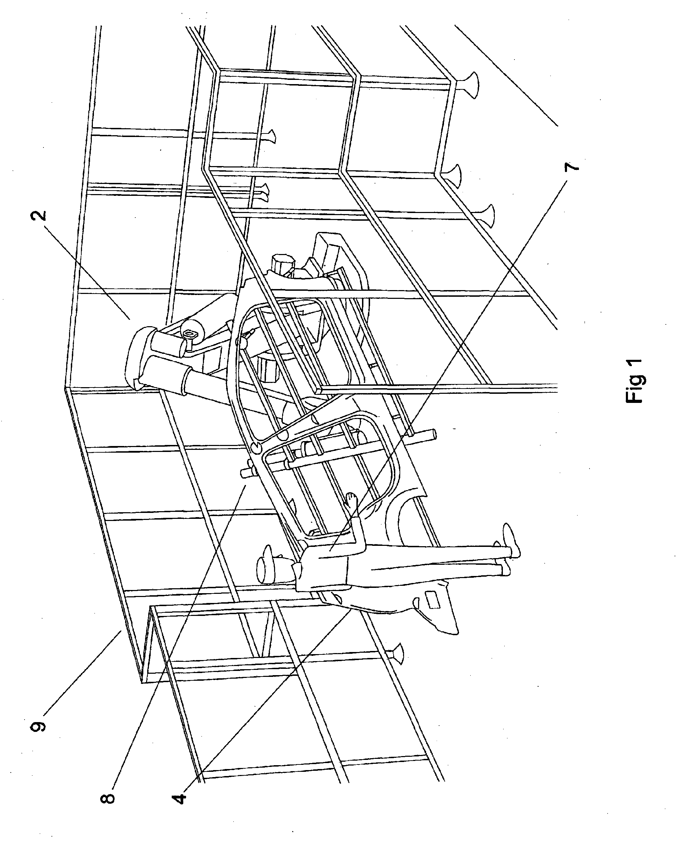

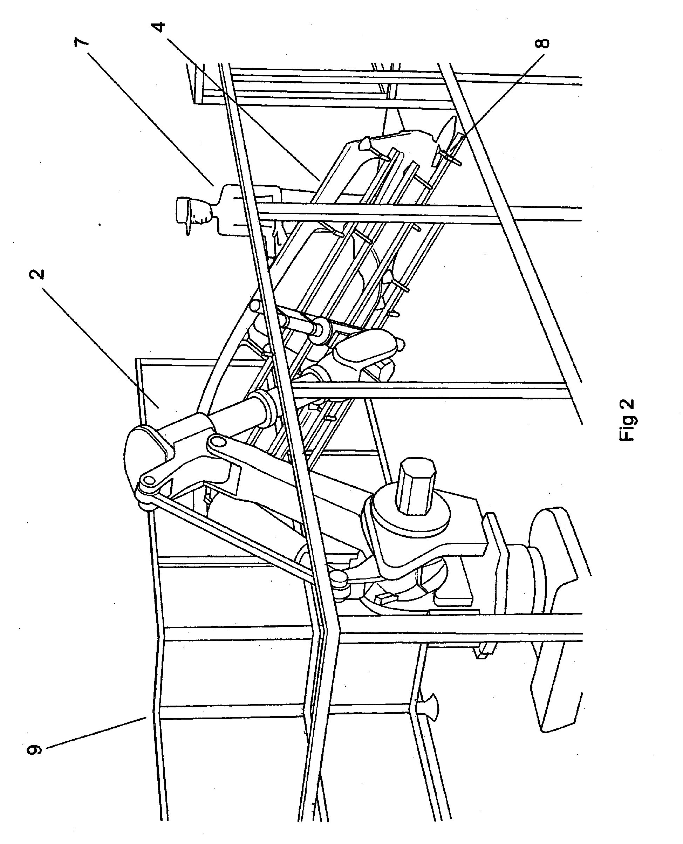

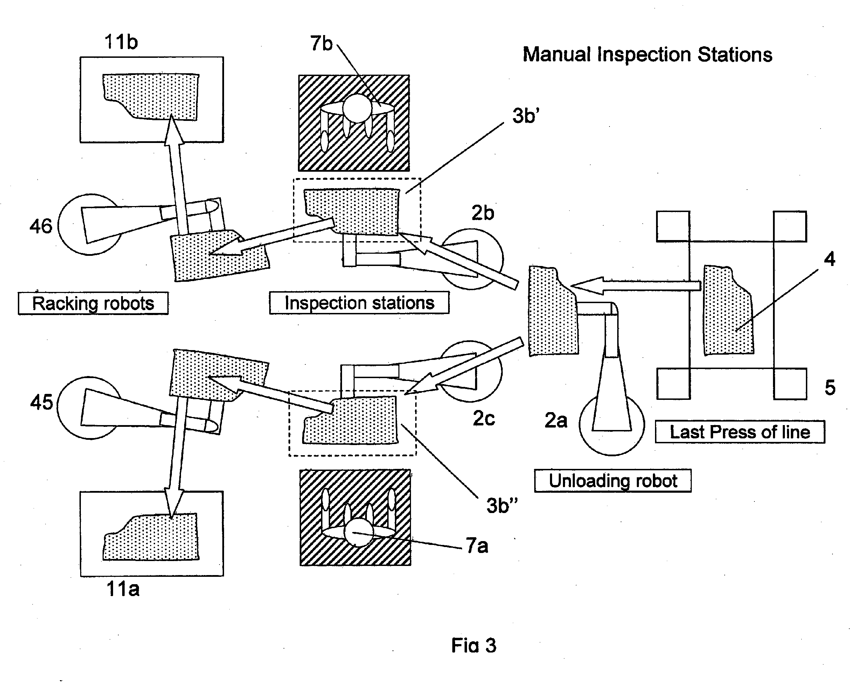

Figures 1 and 2 show two computer simulated views of a quality inspection cell 9 including an industrial robot 2 which is arranged for manual inspection. The industrial robot 2 is arranged with a handling tool 8, which may be a gripper, used to pick up a part 4 manufactured in production process (not shown here see Figs 3, 5, 8-10). The inspection cell functions in the following way. The industrial robot 2 picks up the part 4 with handling tool 8 from the production process (not shown) and moves it to at least one known position, fixed and pre-programmed in advance, thus predetermined in the quality inspection cell. First the robot moves the part 4 to the at least one known position relative to where an operator 7 shall be positioned. The safety issues in this process are described below. The robot holds the part or, so as to say, presents the part to the operator so that the operator can make an inspection efficiently and simply. The robot holds the part in exactly the right orientation for the operator to inspect the surface or edge or seam etc of interest on the part (for each of the at least one known position); and at the most ergonomically suitable height above the floor and distance from the operator.

The operator visually inspects the surface or surfaces of interest. The part is always in the right position and right orientation so that the surface appearance, and any defects, are properly illuminated and positioned so that an operator consistently can see them.

The operator may use a tool or jig or a sensor in the inspection. The robot may turn or move the part within the boundaries of the at least one known position to present the part for more than one inspection and/or measurement stage. When the inspection is complete the operator pushes a button or makes another type of input signal to a control system, and the robot then moves the part, if ok to one place for example a fixture or rack (not shown here) to proceed to a subsequent stage in the process. If not ok, the robot places the rejected part on a fixture or rack or conveyor (not shown) for example for repair, or further inspection, or other action except to continue in the production process.

Figure 3 shows a layout for manual inspection in a quality inspection cell. Figure 3 shows from right to left a flow followed by the parts, as indicated by the arrows. in the diagram a production process 5, a manufactured part 4, a first industrial robot 2a which picks up part 4 unloading it from the production process 5. The diagram also shows two further industrial robots 2b and 2c, two manual inspection stations 7b, 7a at which an operator is stationed, and two further robots 45, 46 which place parts 4 in racks 11b, 11a after inspection. In this example of a press line, the last press in 2a line of presses is the production process 5 under consideration. Unloading robot 2a picks up the part 4 from the production process. In this layout with a relatively fast cycle time the flow of parts is split and the parts are passed to the two robots 2b, 2c to handle the quality inspection and to allow a longer cycle time for inspection and/or racking. The industrial robots 2b, 2c each may then turn the part 4 to the desired orientation in 3-dimensional space and move the part to at least one predetermined, pre-programmed, known position 3b', 3b" at the operator stations 7a, 7b, in front of the operator. The robot may move the part through more than one position (and/or more than one orientation) depending on which features of the part shall be inspected. The operator makes a visual inspection and may use tools or sensors in addiction. The operator signals via a button or other input device the quality inspection result and the part is moved away by the robots 2b, 2c. Robots 2b, 2c then hand over the inspected parts to racking robots 45, 46. Parts to be set on racks to proceed in the process are place on the racks by the two further industrial robots 45, 46.

It should be noted that the industrial robot 2 or 2a that unloads the part "knows" the position of the part, ie the position and orientation of the part 4 in space is established and recorded in the control unit and or computer programs. When the unloading robot 2 or 2a hands over the part to a second robot such as 2b or 2c, the determination of position and orientation is continued, and no detection or calibration is necessary to establish exactly where in space the part is at any point in the quality inspection process. In this way in the part can be placed in exactly the right position and orientation at known position 3 or 3b', 3b" in front of the operator and or sensor etc which ensures accurate and consistent quality inspection.

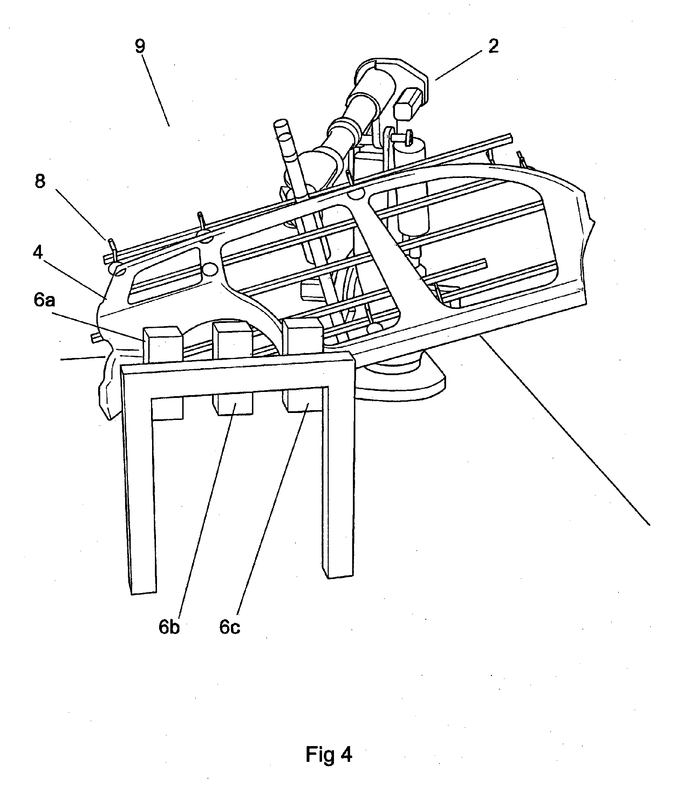

Figure 4 shows another embodiment. It shows an industrial robot, 2 in a quality inspection cell 9. A number of sensors, in the example shown it is 3 sensors 6a-6c, are mounted relative to and adjacent a predetermined and known position in the quality inspection cell. In the case where the inspection is automatic, the robot 2 holding the part 4 in a gripper 8 or other handling tool moves the part 4 to a predetermined and pre-programmed, known position relative to the one or more sensors 6a-6c which are arranged in the inspection cell 9. The handling tool 8 may comprise any device from the group of: vacuum cups, gripper, magnets or other mechanical means. The robot holds or presents the part 4 in a desired orientation at one or more known and predetermined positions in front of the sensors. The known position is often referred to as a position in 3-dimensional space and the desired orientation is often referred to as an orientation with 3 degrees of freedom (DOF). The part is placed in at least one known position in front of the sensors at a predetermined height from the ground, at a predetermined distance from the sensor or sensors, and with a desired or predetermined orientation so that a rapid, accurate and consistent sensor measurement is made in the inspection cell.

The sensors 6a-6c are controlled to make measurements and register signals or measurements with a control unit of the production process or inspection cell. A control signal is supplied to the production system and the robot then moves the part to, for example, another robot or a first rack if the part is ok and shall continue in the process. If the part is not ok, the robot moves it to another place, for example direct to a reject station or gives it to another robot which then places the failed part for subsequent handling, eg in a rack.

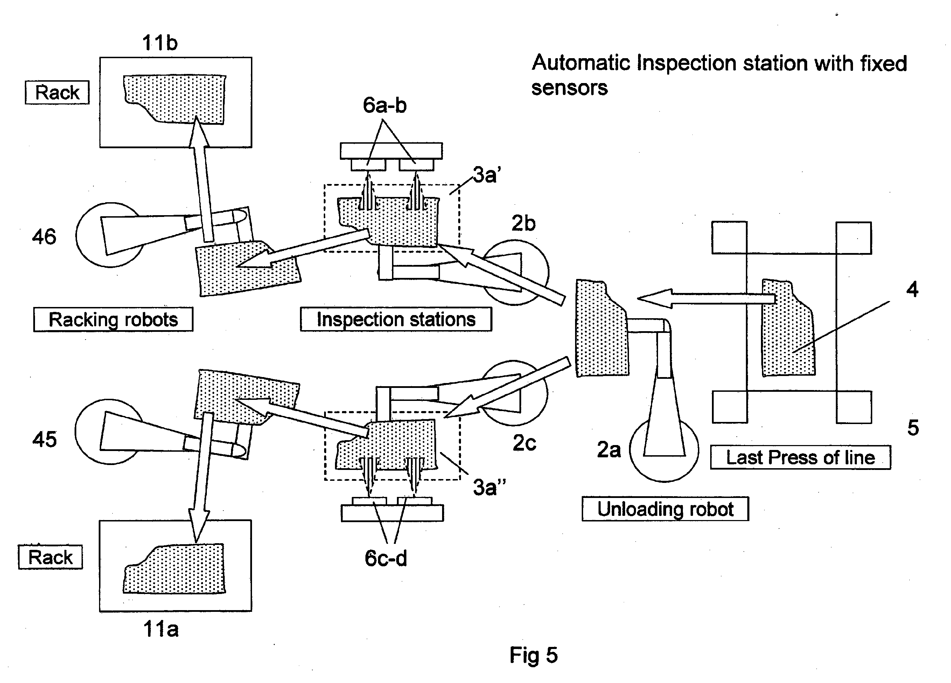

Figure 5 shows a layout for automatic inspection in a quality inspection cell, again using the example of a press line as a production process. It shows from right to left production process 5, manufactured part 4, unloading robot 2a, and two industrial robots 2b, 2c which present the parts in at least one pre-programmed, predetermined known position at 3a' and 3a" in front of fixed automatic sensors 6a, 6b and 6c,6d for automatic inspection. In this layout flow of parts from the production process 5 is once again shown to be split, and the parts divided out to two inspection stations and two racking stations 11b, 11a. This allows the cycle time of inspection and/or of racking to be twice as long as the production cycle time. The flow of parts may be split into more than two streams for inspection and/or may be split into two or more streams after inspection to allow sufficient time for racking.

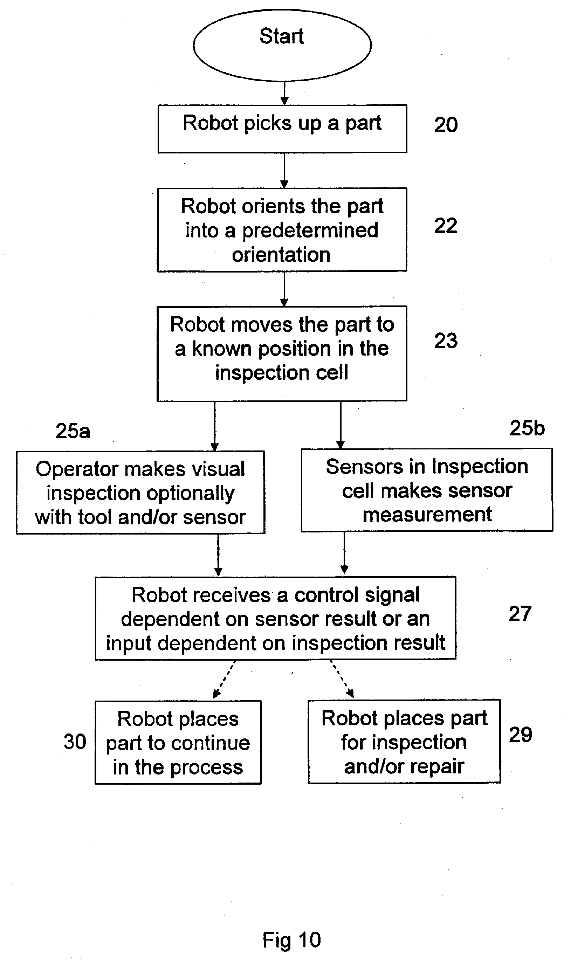

Figure 10 is a flowchart that shows method steps according to one or more embodiments of the invention. The figure shows:
20 Robot picks up part 4 from production process 5;
22 Robot orients the part to a desired, predetermined orientation for inspection at least one known position;
23 Robot moves the part to at least one known position (3, 3a, 3b) in the inspection cell 9 thus holding or presenting the part ready for inspection
25a If a manual inspection the robot has moved the part to at least one known position in front of an operator who makes a visual inspection and may optionally use a tool and/or a sensor;
25b If automatic inspection the robot has moved the part to at least one known position in front of one or more sensors 6a-6c
27 After manual or automatic inspection the robot receives a signal dependent on inspection result;
29 If part has failed the quality inspection the robot places it for repair or further inspection or rejection etc,
30 If part has passed the quality inspection the robot places the part to continue to the next process stage.

The actions 22 and 23 may be combined so that the robot turns or orients the part during the time it moves the part to the know position. The steps may be carried out in another order so that the part is moved 23 to the known position first and then oriented or turned to the desired orientation. with reference to Figures 3 and 5, the part may be turned by the second industrial robots 2b, 2c when or before the part is presented into the known position 3a', 3a" in front of each inspection station.

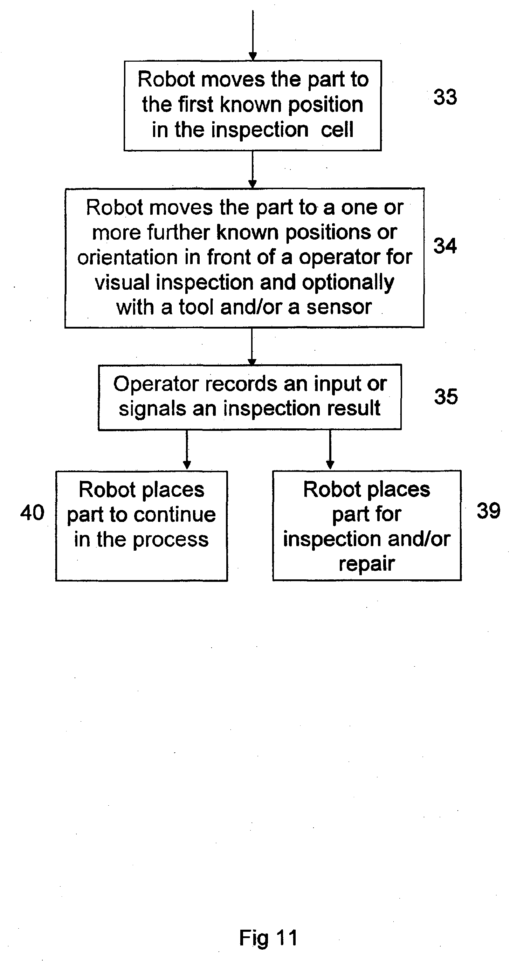

In the case where an operator shall do a manual inspection (Figs 1-3) the method is, in principle, the same, and Figure 11 is a flowchart which illustrates method steps in the manual inspection according to an embodiment of the invention.
33 A robot 2 (or 2b, 2c) moves the part to a known position (3b', 3b") in the inspection cell 9 thus holding or presenting the part ready for manual inspection,
34 Optionally, a robot 2 moves the part to a one or more further known positions or orientations in front of a operator for visual inspection and/or with a tool and/or a sensor,
35 The Operator records an input or signals an inspection result as either ok or pass; or else not ok or fail,
39 If not ok, part failed the quality inspection the robot places it on a second conveyor etc for repair or further inspection etc,
40 If ok, part passed the quality inspection the robot 2 places it on a first conveyor or rack for it to continue to next stage in the process.

Safety issues in the quality inspection cell are handled according to internationally accepted safety standards. Safety devices are included in the cell to prevent an operator coming into contact either with the robot or with the part being handled by the robot. The safety devices may include guards or fences, one or more gates with alarm switches mounted on them, or proximity switches, pressure switches, sensors, light beams and so on. Control functions are also present in the control unit or units related to the robot and the inspection cell designed to carry out safety functions to prevent operator-robot contact. A safety related product for control of robots when working in association with operators called SafeMove may be obtained from ABB Robotics. Emergency stop buttons may be placed in the inspection cell within reach of the operator where necessary.

The quality inspection may be designed to detect defects in the surface finish of a part in different ways. Surface quality and appearance defects may include any of a scratch, crack or crease or other marks caused by dirt or other contamination. The quality inspection may include measurements in relation to surface finish. Measurements may also be taken of dimensions or other parameters that are related to a structural performance.

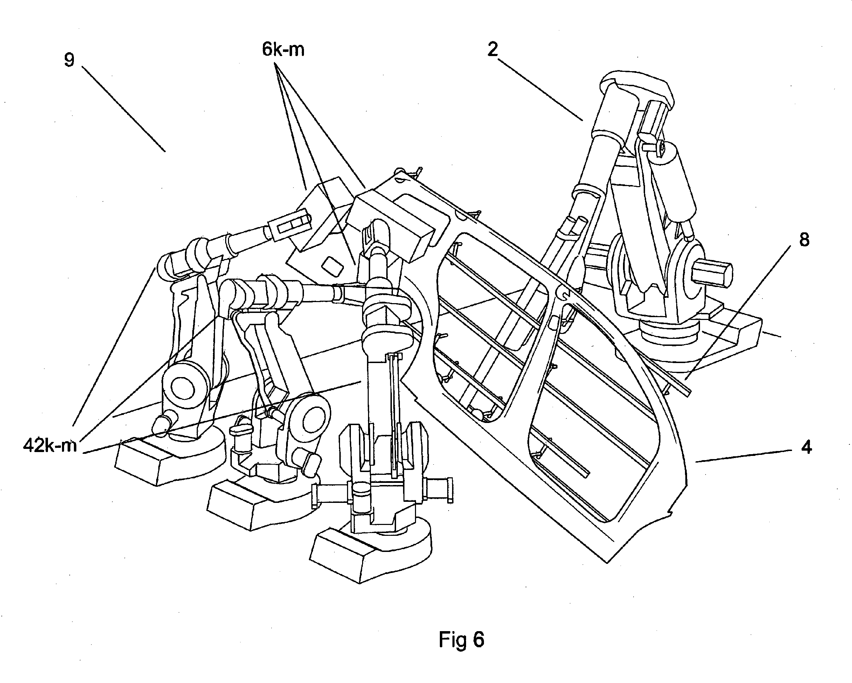

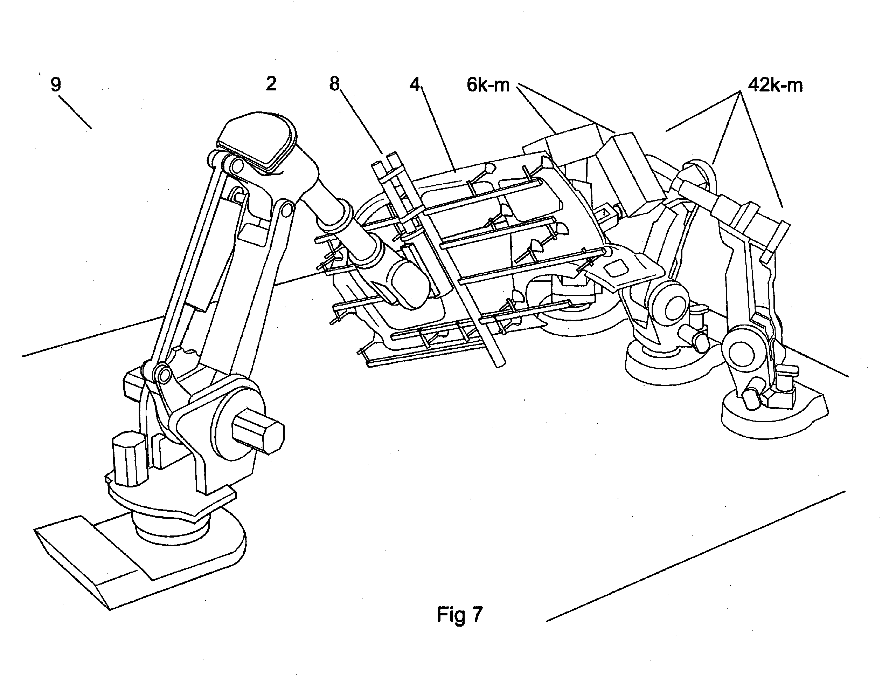

A part may also be inspected using an industrial robot to manipulate a sensor, or using a simpler type of non-servo controlled manipulator. Figure 6 and 7 are diagrams in which a first robot 2 holds or presents the manufactured part 4 in at least one known position. One or more sensors are arranged handled by, as shown in this case, three small industrial robots 42k-m. The small robots 42 k-m each hold at least one of the sensors 6k-m. The small robots each point the sensor they hold in a predetermined direction at the part 4 that is held by unloading robot 2 in at least one known position and at least one predetermined orientation. The unloading robot 2 may hold and orient the part 4 in a plurality of positions and orientations as required for multiple inspections and inspection measurements.

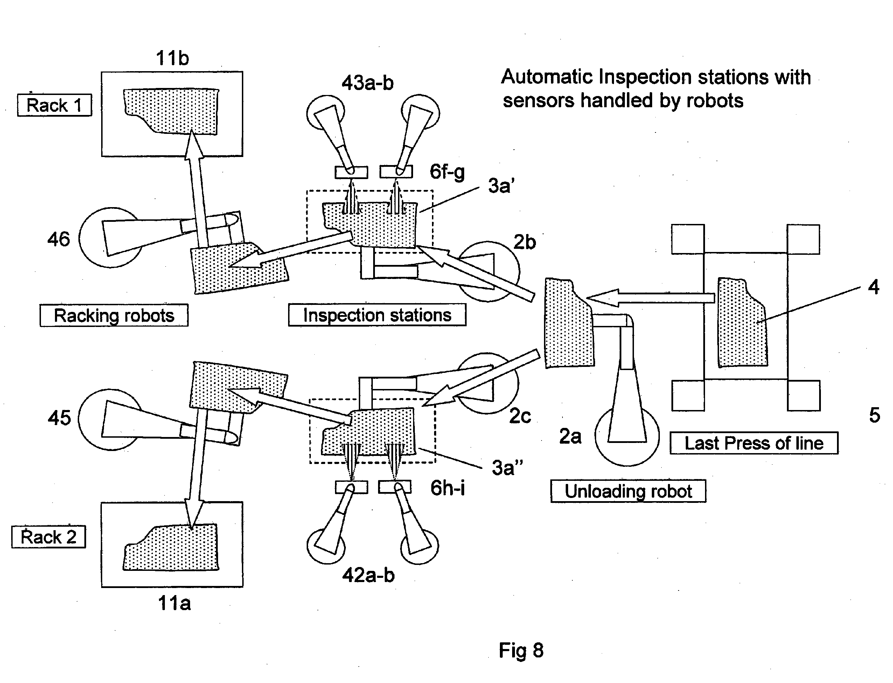

Figure 8 shows a layout for quality inspection cells including sensors handled by a robot. The figure shows from right to left a part 4 and production process 5, unloading robot 2a, two further industrial robots 2b, 2c, two quality inspection stations with sensors 6f-g and 6h-i mounted on robots 43ab and 42ab. The parts are inspected using sensors held or manipulated by the robots 42ab, 43ab and directed at the part held in the pre-programmed known and predetermined position 3a' or 3a". Two further industrial robots 46, 45 are arranged to receive parts after inspection and place them in racks 11a, 11b or if rejected on conveyors etc. as appropriate.

In some embodiments the first industrial robot unloading the production process or press passes one part to a second robot and another part to a third robot thus splitting the unloaded parts into two streams. The parts can be turned over after they are picked-up from the production process eg by robot 2, 2a or else turned over later, for example during the robot-robot handover such as from robot 2a to robot 2b or 2c. The second and third robots 2b, 2c then each present the part they are holding to at least one known and predetermined position, with at least one known orientation, in an inspection cell as before.

In another embodiment, the first industrial robot unloading the production process or press leaves the parts at an intermediate place, for example on a rack or fixture. A second industrial robot then takes the part from the intermediate rack or fixture and moves the part 4 to the at least one known position such as 3a or 3b in the inspection cell as described above.

In another development the parts may be placed in one or more racks or fixtures. Optionally one or more other manipulators or robots handling inspection sensor(s), may be programmed to check the part while it is located in the one or more racks or fixtures to detect defects. The fixtures or racks are arranged such that the position of the part is known and maintained. Robots, either the same as the unloading robot or another one, may then take the rack-checked part to continue the production process or else reject it in case of a detected defect.

When unloading the production process the part 4 may be picked up by two robots working together if the part, for example is particularly large or difficult to handle (not shown in the figures). Two robots may also be used to hold the part in one or more known positions in the inspection cell.

After the quality inspection is completed the robot may give the part to another robot or if required, place part 4 on a conveyor, which are both relatively quick operations. If the part shall be placed on a rack or other fixture after the quality inspection this may be done directly by the inspecting robot 2b or 2c unloading robot. However, as placing a part on a rack often takes more time than eg a traditional placing on a conveyor, and in order to maintain information about the part position and orientation, the inspecting robot may instead place the part on an intermediate fixture, or give it to another robot which then places it on the rack or a nest.

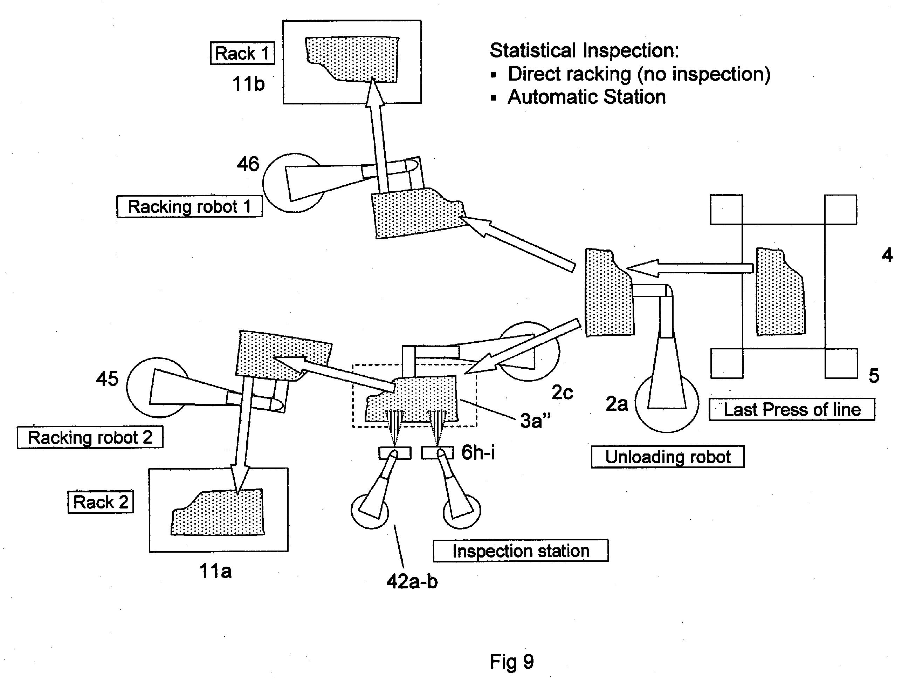

The unloading robot is preferably an industrial robot with movement in 6 degrees of freedom, or more. Other manipulators may be used in the inspection cell which may be simpler manipulators. More simple mechanical, hydraulic or pneumatic manipulators may be used for example to hold, handle or move a sensor as part of a more flexible inspection process in the inspection cell. For example in the layout of Figure 8 or 9 one or more of the robots 42a or 42b or 43a or 43b may be replaced by a simpler manipulator.

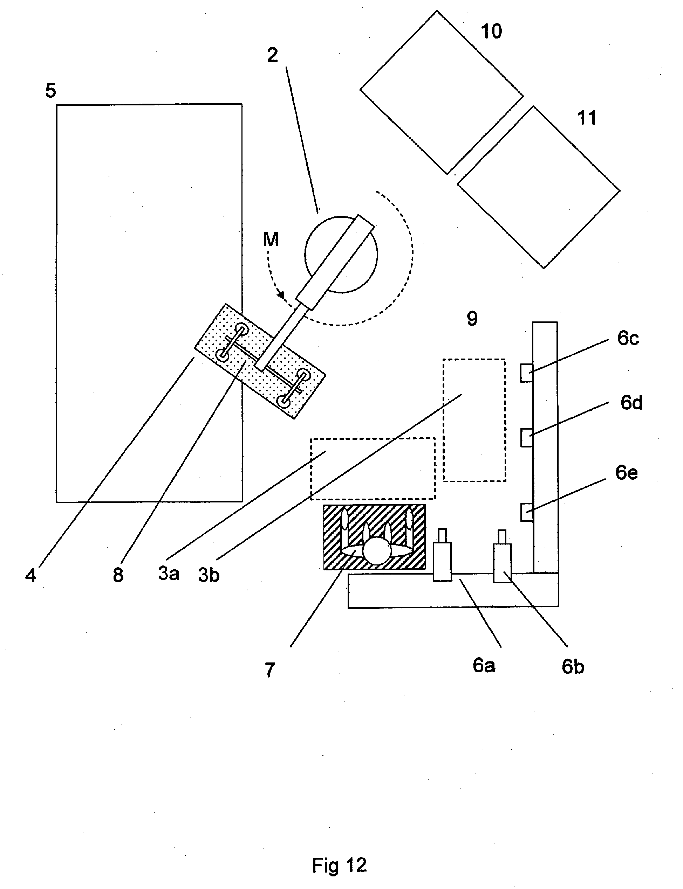

Figure 12 shows a layout for an embodiment in which the unloading robot 2 also carries out handling of the part during quality inspection. The figure shows a production process 5, a manufactured part 4, and an industrial robot with a handling tool 8. There are two stations 10, 11 in the cell or adjacent to it which may be fixtures or racks on which an inspected part may be placed by the robot, or by a second robot (not shown). The robot is installed in a quality inspection cell 9 which contains both an operator station 7 and a sensor station. The sensor station contains a number of sensors 6a-6e some of which are in a fixed position. A known predetermined position 3b is indicated in front of the sensors. The inspection cell also includes an operator station 7 where an operator may stand to carry out a visual inspection of the part 4. In the case of manual inspection the robot 2 holds the part in at least one known position 3a in front of the operator. As described in relation to other embodiments above the robot may move the part through a plurality of orientations in the at least one position 3a or 3b during a quality inspection. An advantage of this embodiment is that for a part with a long cycle time the robot can carry out both unloading the part and inspecting it. Another advantage is for the less common case when a part is manufactured in which the robot picks up the part by the upper side but when it is that the other side, meaning the lower side, is the side that must be inspected. In that case the robot that unloads the part can hold it in front of, or point it towards an operator and/or a sensor and a turnover of the part is not necessary.

In another embodiment of the invention a quality inspection process may be arranged to operate on a proportional or statistical basis. Figure 9 shows a quality inspection layout in which a statistical proportion of the parts are inspected. Figure 9 shows a production process 5, unloading robot 2, two further industrial robots 2a and 2b and one automatic quality inspection cell. Unloading robot 2 hands over a predetermined number of parts, for example 50%, to a second industrial robot 2a which moves the part to a pre-programmed, predetermined known position 3s" in the automatic inspection cell in front of the sensors 6h-i. After quality inspection the part is passed to a racking robot 45 for racking as quality ok, passed. If the inspection is failed then for example racking robot 45 may place the part on a conveyor for as a reject. The other parts are passed directly to another racking robot 46 which racks them without inspection.

The methods of quality control inspection as described above in relation to Figures 10, 11 and elsewhere in this specification may be carried out by a computer application comprising computer program elements or software code which, when loaded in a processor or computer, causes the computer or processor to carry out the method steps. Methods or functions of the methods may be carried out by processing digital functions, algorithms and/or computer programs and/or by analogue components or analogue circuits or by a combination of both digital and analogue functions.

The methods of the invention may, as previously described, be carried out by means of one or more computer programs comprising computer program code or software code portions running on a computer or a processor. The processor (or processors) comprises a central processing unit CPU performing the steps of the method according to one or more facets of the invention. The method or methods are performed with the aid of one or more said computer programs, such as program instructions to a robot to pick up a manufactured part and hold the manufactured part in at least one known position for inspection procedures, which are stored at least in part in memory and as such accessible by the one or more processors. The or each processor may be arranged with access to a memory storage unit of a process system control unit or a robot control unit or a PLC (Programmable Logic Controller) in a production process. The computer program comprises computer program code elements or software code portions that make the computer perform the method using equations, algorithms, data, stored values and calculations previously described.

A part of the program may be stored in a processor as above, but also in a ROM, RAM, PROM, EPROM or EEPROM chip or similar memory means. The program in part or in whole may also be stored on, or in, other suitable computer readable medium such as a magnetic disk, CD-ROM or DVD disk, hard disk, magneto-optical memory storage means, in volatile memory, in flash memory, as firmware, stored on a data server or on one or more arrays of data servers. Other known and suitable media, including removable memory media such as memory sticks or other removable flash memories, hard drives etc. may also be used.

The computer programs described may also be arranged in part as a distributed application. Data such as start positions, home positions, event waypoints, path waypoints or other information for a programmed robot path to hold a part in a known position may be made available for retrieval, delivery or, in the case of programs, execution over the Internet. Data may be accessed by means of any of: OPC, OPC servers, an Object Request Broker such as COM, DCOM or CORBA, a web service.

It should be noted that while the above describes exemplifying embodiments of the invention, there are several variations and modifications such as various combinations of unloading robots and inspecting robots which may be made to the disclosed solution without departing from the scope of the present invention as defined in the appended claims.

## Claims

1. A system for production of manufactured parts comprising a production process having at least one industrial robot (2) equipped with a handling tool (8) for picking up a manufactured part (4), **characterized in that** the robot is arranged in a quality inspection cell (9) and that the robot is programmed to hold the manufactured part in at least one known position (3) in the quality inspection cell, orient the manufactured part in a known orientation in 3-dimensional space relative to the known position and present the part for a quality inspection.

2. A system according to claim 1, **characterized in that** the quality inspection cell is arranged with safety devices and/or safety functions for protecting an operator from coming into contact with the robot (2) and/or the manufactured part (4) being handled for manual inspection by the operator.

3. A system according to claim 1, **characterized in that** the quality inspection cell having one or more sensors (6) arranged in the cell for making a quality inspection.

4. A system according to claim 1 or 3, **characterized in that** the known position consists of one or more positions and orientations of the part in the quality inspection cell suitable for an operator to inspect the part visually and/or with the use of a tool or sensor.

5. A system according to claim 3 or 4, **characterized in that** the one or more sensors (6a-6c) are each arranged in fixed position in the quality inspection cell.

6. A system according to claim 3, **characterized in that** at least one of the one or more sensors is arranged on a servo-controlled second manipulator.

7. A system according to claim 3 or 5, **characterized in that** at least one of the one or more sensors is arranged on a second manipulator which is not servo-controlled.

8. A system according to any one of claims 3-7, **characterized in that** the at least one of the one or more sensors is arranged to measure one or more values dependent on a surface quality of the part.

9. A system according to any one of claims 3-7, **characterized in that** the at least one of the one or more sensors is arranged to measure one or more values dependent on a structural parameter of the part.

10. A system according to any one of claims 3-7, **characterized in that** the at least one of the one or more sensors is arranged to measure one or more values dependent on a dimension of the part.

11. A system according to claim 1, **characterized in that** the handling tool (8) comprises any from the group of: vacuum cups, gripper, magnets or other mechanical means.

12. A system according to claim 1, **characterized in that** at least one second robot (2b, 2c) is arranged relative to the quality inspection cell and programmed to receive the part (4) from the unloading robot (2, 2a) and to hold the manufactured part in at least one known position (3) in the quality inspection cell and present the part for a quality inspection.

13. A system according to claim 1, **characterized in that** a second industrial robot is arranged relative to the quality inspection cell suitable to pick up the manufactured part together with the first robot.

14. A system according to claim 1, **characterized in that** the quality inspection cell further comprises a rack (10, 11) or fixture suitable for holding one or more manufactured parts in a known position and orientation for subsequent pick up and quality inspection.

15. A method for production of manufactured parts, comprising a production process having at least one industrial robot (2) equipped with a handling tool (8) for picking up a manufactured part (4), **characterized by** the robot (2) picking up the manufactured part and moving it to at least one known position in the quality inspection cell, orienting the manufactured part in a known orientation in 3-dimensional space relative to the known position and presenting it for a quality inspection.

16. A method according to claim 15, **characterized by** the robot picking up a manufactured part and moving it to at least one known position in the quality inspection cell for the operator to inspect the part visually.

17. A method according to claim 15 or 16, **characterized by** the robot picking up a manufactured part and moving it to at least one known position in the quality inspection cell for the operator to inspect the part using a sensor and /or a tool.

18. A method according to claim 15, **characterized by** the robot picking up a manufactured part and placing it in a known position and orientation relative to one or more sensors in the inspection cell for an automatic inspection.

19. A method according to any one of claims 15-18, **characterized by** the robot picking up a manufactured part and moving it to at least one known position relative to at least one tool or sensor operated by an operator, and by receiving an input of an inspection result or a measurement for the manufactured part to a control unit in the production system.

20. A method according to claim 15, **characterized by** the robot picking up a manufactured part and moving it to at least one known position relative to at least one sensor mounted on a manipulator arm of the robot.

21. A method according to claim 15, **characterized by** the robot picking up a manufactured part and moving it to a known position relative to at least one sensor mounted on a second and non-servo controlled manipulator.

22. A method according to claim 15, **characterized by** activating a safety devices and/or a safety function arranged with the robot before a manual inspection by an operator.

23. A method according to any of claims 15 or 18, **characterized by** the robot picking up a manufactured part and moving it to at least one known position relative to at least one sensor for measurement of one or more values dependent on any from the group of: a surface quality of the part, a structural parameter of the part, a dimension of the part.

24. A method according to any one of claims 15-23, **characterized by** the robot moving a manufactured part that has been quality inspected and placing it on a fixture or a rack for transfer to a subsequent process.

25. A method according to any one of claims 15-23, **characterized by** the robot moving a manufactured part that has been quality inspected and rejected and placing it on a conveyor, fixture or a rack for inspection and/or repair.

26. A method according to any one of claims 15-23, **characterized by** the robot (2) picking up a manufactured part (4) and handing it to at least one second robot (2a, 2b) for inspection and/or further placement.

27. A method according to claim 26, **characterized by** a second robot (2a, 2b) receiving a manufactured part (4) from another robot (2) which second robot moves the part to at least one known position (3a, 3b) in the quality inspection cell and presents it for a quality inspection.

28. A method according to claim 15, **characterized by** the robot picking up a manufactured part from the production process and placing it on a rack before it is moved by a second robot to the quality inspection cell for a quality inspection.

29. A method according to claim 15, **characterized by** the robot picking up a manufactured part together with a second robot, and the two robots moving the part together to a known position relative in the quality inspection cell.

30. A method according to claim 15, **characterized by** the robot (2, 2a) picking up the manufactured part and handing each manufactured part in turn to one or more second robots (2b, 2c) to carry out a quality inspection on a proportion of the total number of manufactured parts.

31. A computer program stored in a memory storage device of a control unit for production process including a quality inspection cell which when fed into a computer or processor will carry out the steps of a method according to claim 1.

32. Use of a system according to any of claims 15-30 to carry out a quality inspection of parts manufactured in a production process for vehicles or vehicle components.

## Patentansprüche

1. System zur Herstellung von Fertigungsteilen, welches ein Herstellungsverfahren mit mindestens einem Industrieroboter (2) aufweist, der mit einem Handling-Werkzeug (8) zum Aufnehmen eines Fertigungsteils (4) ausgestattet ist, **dadurch gekennzeichnet, dass** der Roboter in einer Qualitätsprüfungszelle (9) angeordnet ist und dass der Roboter dazu programmiert ist, das Fertigungsteil in mindestens einer bekannten Position (3) in der Qualitätsprüfungszelle zu halten, das Fertigungsteil in einer bekannten Ausrichtung im dreidimensionalen Raum relativ zu der bekannten Position auszurichten und das Teil für eine Qualitätsprüfung zu übergeben.

2. System nach Anspruch 1, **dadurch gekennzeichnet, dass** die Qualitätsprüfungszelle versehen ist mit Sicherheitsvorrichtungen und/oder Sicherheitsfunktionen, um eine Bedienperson davor zu schützen, mit dem Roboter (2) und/oder dem Fertigungsteil (4), das für eine manuelle Prüfung durch die Bedienperson gehandhabt wird, in Berührung zu kommen.

3. System nach Anspruch 1, **dadurch gekennzeichnet, dass** die Qualitätsprüfungszelle einen oder mehrere Sensoren (6) aufweist, die in der Zelle zum Durchführen einer Qualitätsprüfung angeordnet sind.

4. System nach Anspruch 1 oder 3, **dadurch gekennzeichnet, dass** die bekannte Position aus einer oder mehreren Positionen und Ausrichtungen des Teils in der Qualitätsprüfungszelle besteht, die dazu geeignet sind, einer Bedienperson zu ermöglichen, das Teil einer Sichtkontrolle und/oder einer Überprüfung mittels eines Werkzeuges oder Sensors zu unterziehen.

5. System nach Anspruch 3 oder 4, **dadurch gekennzeichnet, dass** der eine oder die mehreren Sensoren (6a-6c) jeweils in einer festen Position in der Qualitätsprüfungszelle angeordnet sind.

6. System nach Anspruch 3, **dadurch gekennzeichnet, dass** mindestens einer des einen oder der mehreren Sensoren an einem servogesteuerten zweiten Manipulator angeordnet ist.

7. System nach Anspruch 3 oder 5, **dadurch gekennzeichnet, dass** mindestens einer des einen oder der mehreren Sensoren an einem zweiten Manipulator, der nicht servogesteuert ist, angeordnet ist.

8. System nach einem beliebigen der Ansprüche 3-7, **dadurch gekennzeichnet, dass** der mindestens eine des einen oder der mehreren Sensoren angeordnet ist, um einen oder mehrere Werte abhängig von einer Oberflächengüte des Teils zu messen.

9. System nach einem beliebigen der Ansprüche 3-7, **dadurch gekennzeichnet, dass** der mindestens eine des einen oder der mehreren Sensoren angeordnet ist, um einen oder mehrere Werte abhängig von einem Strukturparameter des Teils zu messen.

10. System nach einem beliebigen der Ansprüche 3-7, **dadurch gekennzeichnet, dass** der mindestens eine des einen oder der mehreren Sensoren angeordnet ist, um einen oder mehrere Werte abhängig von einer Abmessung des Teils zu messen.

11. System nach Anspruch 1, **dadurch gekennzeichnet, dass** das Handling-Werkzeug (8) ein beliebiges aus der Gruppe umfassend Saugnäpfe, Greifer, Magnete oder andere mechanische Mittel aufweist.

12. System nach Anspruch 1, **dadurch gekennzeichnet, dass** mindestens ein zweiter Roboter (2b, 2c) relativ zu der Qualitätsprüfungszelle angeordnet und dazu programmiert ist, das Teil (4) von dem Entladeroboter (2, 2a) entgegenzunehmen und das Fertigungsteil in mindestens einer bekannten Position (3) in der Qualitätsprüfungszelle zu halten und das Teil für eine Qualitätsprüfung zu übergeben.

13. System nach Anspruch 1, **dadurch gekennzeichnet, dass** ein zweiter Industrieroboter relativ zu der Qualitätsprüfungszelle angeordnet und dazu geeignet ist, gemeinsam mit dem ersten Roboter das Fertigungsteil aufzunehmen.

14. System nach Anspruch 1, **dadurch gekennzeichnet, dass** die Qualitätsprüfungszelle ferner ein Gestell (10, 11) oder eine Aufnahmevorrichtung aufweist, die zum Halten eines oder mehrerer Fertigungsteile in einer bekannten Position und Ausrichtung für die nachfolgende Aufnahme und Qualitätsprüfung geeignet sind.

15. Verfahren zur Herstellung von Fertigungsteilen, umfassend einen Herstellungsprozess mit mindestens einem Industrieroboter (2), der mit einem Handling-Werkzeug (8) zum Aufnehmen eines Fertigungsteils (4) ausgestattet ist, **dadurch gekennzeichnet, dass** der Roboter (2) das Fertigungsteil aufnimmt und dieses zu mindestens einer bekannten Position in der Qualitätsprüfungszelle bewegt, das Fertigungsteil in einer bekannten Ausrichtung im dreidimensionalen Raum relativ zu der bekannten Position ausrichtet und dieses für eine Qualitätsprüfung übergibt.

16. Verfahren nach Anspruch 15, **dadurch gekennzeichnet, dass** der Roboter ein Fertigungsteil aufnimmt und dieses zu mindestens einer bekannten Position in der Qualitätsprüfungszelle bewegt, damit die Bedienperson das Teil einer Sichtkontrolle unterziehen kann.

17. Verfahren nach Anspruch 15 oder 16, **dadurch gekennzeichnet, dass** der Roboter ein Fertigungsteil aufnimmt und dieses zu mindestens einer bekannten Position in der Qualitätsprüfungszelle bewegt, damit die Bedienperson das Teil mittels eines Sensors und/oder eines Werkzeugs überprüfen kann.

18. Verfahren nach Anspruch 15, **dadurch gekennzeichnet, dass** der Roboter ein Fertigungsteil aufnimmt und dieses in einer bekannten Position und Ausrichtung relativ zu einem oder mehreren Sensoren in der Prüfungszelle für eine automatische Prüfung ablegt.

19. Verfahren nach einem beliebigen der Ansprüche 15-18, **dadurch gekennzeichnet, dass** der Roboter ein Fertigungsteil aufnimmt und dieses zu mindestens einer bekannten Position relativ zu mindestens einem Werkzeug oder einem Sensor, die durch eine Bedienperson bedient werden, bewegt, und dass er eine Eingabe eines Prüfergebnisses oder einer Messung für das Fertigungsteil an eine Steuereinheit in dem Herstellungssystem empfängt.

20. Verfahren nach Anspruch 15, **dadurch gekennzeichnet, dass** der Roboter ein Fertigungsteil aufnimmt und dieses zu mindestens einer bekannten Position relativ zu mindestens einem Sensor bewegt, der an einem Manipulatorarm des Roboters angebracht ist.

21. Verfahren nach Anspruch 15, **dadurch gekennzeichnet, dass** der Roboter ein Fertigungsteil aufnimmt und dieses zu einer bekannten Position relativ zu mindestens einem Sensor bewegt, der an einem zweiten und nichtservogesteuerten Manipulator angebracht ist.

22. Verfahren nach Anspruch 15, **gekennzeichnet durch** Aktivieren einer Sicherheitsvorrichtung und/oder einer Sicherheitsfunktion, die bei dem Roboter angeordnet ist, vor einer manuellen Prüfung **durch** eine Bedienperson.

23. Verfahren nach einem beliebigen der Ansprüche 15 oder 18, **dadurch gekennzeichnet, dass** der Roboter ein Fertigungsteil aufnimmt und dieses zu mindestens einer bekannten Position relativ zu mindestens einem Sensor bewegt, zur Messung von einem oder mehreren Werten in Abhängigkeit von beliebigen aus der Gruppe umfassend: eine Oberflächengüte des Teils, einen Strukturparameter des Teils, eine Abmessung des Teils.

24. Verfahren nach einem beliebigen der Ansprüche 15-23, **dadurch gekennzeichnet, dass** der Roboter ein Fertigungsteil bewegt, das qualitätsgeprüft wurde, und dieses auf einer Aufnahmevorrichtung oder einem Gestell zur Übergabe an einen nachfolgenden Prozess ablegt.

25. Verfahren nach einem beliebigen der Ansprüche 15-23, **dadurch gekennzeichnet, dass** der Roboter ein Fertigungsteil bewegt, das qualitätsgeprüft und für nicht in Ordnung befunden wurde, und dieses auf einem Förderer, einer Aufnahmevorrichtung oder einem Gestell zur Überprüfung und/oder Reparatur ablegt.

26. Verfahren nach einem beliebigen der Ansprüche 15-23, **dadurch gekennzeichnet, dass** der Roboter (2) ein Fertigungsteil (4) aufnimmt und dieses an mindestens einen zweiten Roboter (2a, 2b) zur Überprüfung und/oder weiteren Ablage übergibt.

27. Verfahren nach Anspruch 26, **dadurch gekennzeichnet, dass** ein zweiter Roboter (2a, 2b) ein Fertigungsteil (4) von einem anderen Roboter (2) erhält, wobei der zweite Roboter das Teil zu mindestens einer bekannten Position (3a, 3b) in der Qualitätsprüfungszelle bewegt und dieses für eine Qualitätsprüfung übergibt.

28. Verfahren nach Anspruch 15, **dadurch gekennzeichnet, dass** der Roboter ein Fertigungsteil von dem Herstellungsprozess aufnimmt und dieses auf ein Gestell ablegt, ehe es durch einen zweiten Roboter für eine Qualitätsüberprüfung zu der Qualitätsprüfungszelle bewegt wird.

29. Verfahren nach Anspruch 15, **dadurch gekennzeichnet, dass** der Roboter gemeinsam mit einem zweiten Roboter ein Fertigungsteil aufnimmt und die beiden Roboter das Teil gemeinsam zu einer bekannten Position relativ zu der Qualitätsprüfungszelle bewegen.

30. Verfahren nach Anspruch 15, **dadurch gekennzeichnet, dass** der Roboter (2, 2a) das Fertigungsteil aufnimmt und jedes Fertigungsteil seinerseits zu einem oder mehreren zweiten Robotern (2b, 2c) reicht, um an einem Teil der gesamten Anzahl an Fertigungsteilen eine Qualitätsprüfung durchzuführen.

31. Rechnerprogramm, das in einer Speichervorrichtung einer Steuerungseinheit für einen Herstellungsprozess, der eine Qualitätsprüfungszelle aufweist, gespeichert ist, welches, wenn es in einen Rechner oder Prozessor eingespeist wird, die Schritte eines Verfahrens gemäß Anspruch 1 durchführt.

32. Verwendung eines Systems nach einem beliebigen der Ansprüche 15-30, um eine Qualitätsprüfung an Teilen durchzuführen, die in einem Herstellungsprozess für Fahrzeuge oder Fahrzeugkomponenten gefertigt werden.

## Revendications

1. Système pour la production de pièces fabriquées comprenant un processus de production ayant au moins un robot industriel (2) équipé d'un outil de manipulation (8) pour ramasser une pièce fabriquée (4), **caractérisé en ce que** le robot est disposé dans une cellule de contrôle de la qualité (9) et **en ce que** le robot est programmé de façon à maintenir la pièce fabriquée dans au moins une position connue (3) dans la cellule de contrôle de la qualité, à orienter la pièce fabriquée dans une orientation connue dans un espace tridimensionnel par rapport à la position connue et à présenter la pièce pour un contrôle de la qualité.

2. Système selon la revendication 1, **caractérisé en ce que** la cellule de contrôle de la qualité est agencée avec des dispositifs de sécurité et/ou des fonctions de sécurité pour protéger un opérateur contre l'entrée en contact avec le robot (2) et/ou la pièce fabriquée (4) manipulée par l'opérateur pour un contrôle manuel.

3. Système selon la revendication 1, **caractérisé en ce que** la cellule de contrôle de la qualité a un ou plusieurs capteurs (6) disposés dans la cellule pour effectuer un contrôle de la qualité.

4. Système selon la revendication 1 ou 3, **caractérisé en ce que** la position connue consiste en une ou plusieurs positions et orientations de la pièce dans la cellule de contrôle de la qualité appropriées pour permettre à un opérateur de contrôler la pièce visuellement et/ou en utilisant un outil ou un capteur.

5. Système selon la revendication 3 ou 4, **caractérisé en ce qu'**un ou plusieurs capteurs (6a-6c) sont chacun disposés dans une position fixe dans la cellule de contrôle de la qualité.

6. Système selon la revendication 3, **caractérisé en ce qu'**au moins un du ou des capteurs est disposé sur un deuxième manipulateur asservi.

7. Système selon la revendication 3 ou 5, **caractérisé en ce qu'**au moins un du ou des capteurs est disposé sur un deuxième manipulateur qui n'est pas asservi.

8. Système selon l'une quelconque des revendications 3 à 7, **caractérisé en ce que** l'au moins un du ou des capteurs est disposé de façon à mesurer une ou plusieurs valeurs dépendant d'une qualité de surface de la pièce.

9. Système selon l'une quelconque des revendications 3 à 7, **caractérisé en ce que** l'au moins un du ou des capteurs est disposé de façon à mesurer une ou plusieurs valeurs dépendant d'un paramètre structurel de la pièce.

10. Système selon l'une quelconque des revendications 3 à 7, **caractérisé en ce que** l'au moins un du ou des capteurs est disposé de façon à mesurer une ou plusieurs valeurs dépendant d'une dimension de la pièce.

11. Système selon la revendication 1, **caractérisé en ce que** l'outil de manipulation (8) comporte n'importe quel des éléments parmi le groupe comprenant : des coupes à vide, un préhenseur, des aimants ou d'autres moyens mécaniques.

12. Système selon la revendication 1, **caractérisé en ce qu'**au moins un deuxième robot (2b, 2c) est disposé par rapport à la cellule de contrôle de la qualité et programmé de façon à recevoir la pièce (4) du robot de déchargement (2, 2a) et à maintenir la pièce fabriquée dans au moins une position connue (3) dans la cellule de contrôle de la qualité et à présenter la pièce pour un contrôle de la qualité.

13. Système selon la revendication 1, **caractérisé en ce qu'**un deuxième robot industriel est disposé par rapport à la cellule de contrôle de la qualité de manière appropriée pour ramasser la pièce fabriquée avec le premier robot.

14. Système selon la revendication 1, **caractérisé en ce que** la cellule de contrôle de la qualité comprend en outre un râtelier (10, 11) ou un montage de fixation approprié pour maintenir une ou plusieurs pièces fabriquées dans une position et une orientation connues pour qu'elles soient ensuite ramassées et soumises à un contrôle de la qualité.

15. Procédé pour la production de pièces fabriquées comprenant un processus de production ayant au moins un robot industriel (2) équipé d'un outil de manipulation (8) pour ramasser une pièce fabriquée (4), **caractérisé par** le robot (2) qui ramasse la pièce fabriquée et qui la met dans au moins une position connue dans la cellule de contrôle de la qualité, qui oriente la pièce fabriquée dans une orientation connue dans un espace tridimensionnel par rapport à la position connue et qui présente la pièce pour un contrôle de la qualité.

16. Procédé selon la revendication 15, **caractérisé par** le robot qui ramasse une pièce fabriquée et qui la met dans au moins une position connue dans la cellule de contrôle de la qualité pour permettre à l'opérateur de contrôler la pièce visuellement.

17. Procédé selon la revendication 15 ou 16, **caractérisé par** le robot qui ramasse une pièce fabriquée et qui la met dans au moins une position connue dans la cellule de contrôle de la qualité pour permettre à l'opérateur de contrôler la pièce en utilisant un capteur et/ou un outil.

18. Procédé selon la revendication 15, **caractérisé par** le robot qui ramasse une pièce fabriquée et qui la place dans une position et une orientation connues par rapport à un ou plusieurs capteurs dans la cellule de contrôle de la qualité pour permettre un contrôle automatique.

19. Procédé selon l'une quelconque des revendications 15 à 18, **caractérisé par** le robot qui ramasse une pièce fabriquée et qui la met dans au moins une position connue par rapport à au moins un outil ou capteur utilisé par un opérateur, et par la réception d'une entrée d'un résultat de contrôle ou d'une mesure de la pièce fabriquée dans une unité de commande dans le système de production.

20. Procédé selon la revendication 15, **caractérisé par** le robot qui ramasse une pièce fabriquée et qui la met dans au moins une position connue par rapport à au moins un capteur monté sur un bras manipulateur du robot.

21. Procédé selon la revendication 15, **caractérisé par** le robot qui ramasse une pièce fabriquée et qui la met dans au moins une position connue par rapport à au moins un capteur monté sur un deuxième manipulateur non asservi.

22. Procédé selon la revendication 15, **caractérisé par** l'activation d'un dispositif de sécurité et/ou d'une fonction de sécurité agencée avec le robot avant un contrôle manuel par un opérateur.

23. Procédé selon l'une quelconque des revendications 15 à 18, **caractérisé par** le robot qui ramasse une pièce fabriquée et qui la met dans au moins une position connue par rapport à au moins un capteur pour la mesure d'une ou de plusieurs valeurs dépendant de n'importe quel aspect parmi le groupe comprenant : une qualité de surface de la pièce, un paramètre structurel de la pièce, une dimension de la pièce.

24. Procédé selon l'une quelconque des revendications 15 à 23, **caractérisé par** le robot qui bouge la pièce fabriquée qui a été soumise à un contrôle de la qualité et qui la place sur un montage de fixation ou sur un râtelier pour le transfert vers un processus suivant.

25. Procédé selon l'une quelconque des revendications 15 à 23, **caractérisé par** le robot qui bouge une pièce fabriquée qui a été soumise à un contrôle de la qualité et rejetée et qui la place sur un transporteur, un montage de fixation ou un râtelier pour qu'elle soit contrôlée et/ou réparée.

26. Procédé selon l'une quelconque des revendications 15 à 23, **caractérisé par** le robot (2) qui ramasse une pièce fabriquée (4) et qui la passe à au moins un deuxième robot (2a, 2b) pour qu'elle soit contrôlée et/ou placée dans un autre endroit.

27. Procédé selon la revendication 26, **caractérisé par** un deuxième robot (2a, 2b) qui reçoit une pièce fabriquée (4) d'un autre robot (2), lequel deuxième robot met la pièce dans au moins une position connue (3a, 3b) dans la cellule de contrôle de la qualité et la présente pour un contrôle de la qualité.

28. Procédé selon la revendication 15, **caractérisé par** le robot qui ramasse une pièce fabriquée du processus de production et qui la place sur un râtelier avant qu'elle ne soit bougée par un deuxième robot jusqu'à la cellule de contrôle de la qualité pour un contrôle de la qualité.

29. Procédé selon la revendication 15, **caractérisé par** le robot qui ramasse une pièce fabriquée avec un deuxième robot, et par les deux robots qui mettent ensemble la pièce dans une position connue par rapport à la cellule de contrôle de la qualité.

30. Procédé selon la revendication 15, **caractérisé par** le robot (2, 2a) qui ramasse une pièce fabriquée et qui passe chaque pièce fabriquée tour à tour à un ou plusieurs deuxièmes robots (2b, 2c) pour effectuer un contrôle de la qualité sur une proportion du nombre total de pièces fabriquées.

31. Programme informatique stocké dans un dispositif de stockage en mémoire d'une unité de commande pour un processus de production comprenant une cellule de contrôle de la qualité qui, lorsqu'il est alimenté dans un ordinateur ou un processeur, exécutera les étapes d'un procédé selon la revendication 1.

32. Utilisation d'un système selon l'une quelconque des revendications 15 à 30 pour effectuer un contrôle de la qualité de pièces fabriquées dans un processus de production pour des véhicules ou des organes de véhicules.
